# EUROPÄISCHE PATENTANMELDUNG

(11) **EP 3 211 493 A1**
(43) Veröffentlichungstag der Anmeldung: **30.08.2017**
(21) Anmeldenummer: 16157070.0
(22) Anmeldetag: 24.02.2016
(51) Int. Cl.: G05B 19/042

(54) **AUTOMATISIERUNGSSYSTEM ZUR STEUERUNG EINES PROZESSES, EINES GERÄTS UND/ODER EINER ANLAGE**

(71) Anmelder: Siemens Aktiengesellschaft, 80333 München (DE)
(72) Erfinder: Hammon, Harald, 90471 Nürnberg (DE)

(57) **Zusammenfassung**

Die vorliegende Erfindung betrifft ein Automatisierungssystem (100) zur Steuerung eines Prozesses, eines Geräts und/oder einer Anlage (140), umfassend
eine Steuereinrichtung (110) zur Steuerung des Prozesses, des Geräts und/oder der Anlage (140), insbesondere mittels eines in der Steuereinrichtung (110) gespeicherten Steuerprogramms, ein mit der Steuereinrichtung (110) kommunikativ gekoppeltes Bediensystem (120, 122, 124) zum Überwachen und/oder Beeinflussen der Steuereinrichtung (110),
eine Speichereinrichtung (122) zur Speicherung von Bedien-Informationen, wobei jeweils eine Bedien-Information einer Bedien-Aktion eines Benutzers des Bediensystems (120, 122, 124) zugeordnet ist, sowie
eine Überwachungseinrichtung (130, 132), die
- zum Speichern einer an die Steuereinrichtung (110) übertragen Steuer-Nachricht,
- zur Suche nach einer der Steuer-Nachricht zugeordneten Bedien-Information innerhalb der in der Speichereinrichtung (122) gespeicherten Bedien-Informationen sowie
- zum Initiieren einer Warn-Aktivität, wenn keine der Steuer-Nachricht zugeordnete Bedien-Information innerhalb der in der Speichereinrichtung (122) gespeicherten Bedien-Informationen gefunden wurde,
ausgebildet und eingerichtet ist.

## Beschreibung

Die vorliegende Erfindung betrifft ein Automatisierungssystem zur Steuerung eines Prozesses, eines Geräts und/oder einer Anlage, umfassend
eine Steuereinrichtung zur Steuerung des Prozesses, des Geräts und/oder der Anlage, insbesondere mittels eines in der Steuereinrichtung gespeicherten Steuerprogramms,
ein mit der Steuereinrichtung kommunikativ gekoppeltes Bediensystem zum Überwachen und/oder Beeinflussen der Steuereinrichtung, und
eine Speichereinrichtung zur Speicherung von Bedieninformationen, wobei jeweils eine Bedien-Information einer Bedien-Aktion eines Benutzers des Bediensystems zugeordnet ist.

Derartige Automatisierungssysteme sind aus dem Stand der Technik bekannt. So offenbart beispielsweise das US Patent US 6,449,624 B1 ein System und Verfahren um Daten bezüglich einer Modifikation der Konfiguration eines Prozesses zusammen mit Informationen bezüglich dieser Modifikation zu speichern. Solche Daten können sein: die Identität eines Benutzers, der diese Modifikation durchgeführt hat, eine Zeit und Datum der Änderung oder auch eine Begründung für die Änderung. Gemäß dem genannten US Patent werden diese Daten als Versionen der Prozesskonfiguration gespeichert.

Es ist ein Nachteil des Standes der Technik, dass bei Fehlern in einer entsprechenden Anlage die genannten, gespeicherten Versionsinformationen aufwendig ausgewertet werden müssen, um möglichen Fehlerquellen auf die Spur zu kommen. Weiterhin können nicht in der Datenbank gespeicherte, möglicherweise unzulässige Änderungen nicht analysiert werden. Dies verringert beispielsweise unter anderem auch die Sicherheitseigenschaften eines solchen Systems, da entsprechende Änderungen oder Fehler nicht analysiert und deren Quellen somit auch nur schwer zu detektieren sind.

Daher ist es eine Aufgabe der vorliegenden Erfindung, ein System und Verfahren zur Verfügung zu stellen, mit welchem sich die Sicherheit und/oder Fehlerbehandlung innerhalb eines Automatisierungssystems verbessern lässt.

Diese Aufgabe wird gelöst von einem Automatisierungssystem gemäß Patentanspruch 1.

Ein solches Automatisierungssystem ist zur Steuerung eines Prozesses, eines Geräts und/oder einer Anlage ausgebildet und eingerichtet und umfasst eine Steuereinrichtung zur Steuerung des Prozesses, des Geräts und/oder der Anlage, insbesondere mittels eines in der Steuereinrichtung gespeicherten Steuerprogramms. Weiterhin umfasst das Automatisierungssystem ein mit der Steuereinrichtung kommunikativ gekoppeltes Bediensystem zum Überwachen und/oder Beeinflussen der Steuereinrichtung, eine Speichereinrichtung zur Speicherung von Bedien-Informationen, wobei jeweils eine Bedien-Information einer Bedien-Aktion eines Benutzers des Bediensystems zugeordnet ist, sowie eine Überwachungseinrichtung. Die Überwachungseinrichtung ist zum Speichern einer an die Steuereinrichtung übertragenen Steuer-Nachricht, zur Suche nach einer der Steuer-Nachricht zugeordneten Bedien-Information innerhalb der in der Speichereinrichtung gespeicherten Bedien-Informationen, sowie zum Initiieren einer Warn-Aktivität, wenn keine der Steuer-Nachricht zugeordnete Bedien-Information innerhalb der in der Speichereinrichtung gespeicherten Bedien-Informationen gefunden wurde, ausgebildet und eingerichtet.

Auf diese Weise können der Steuereinrichtung zugehende Steuer-Nachrichten mit in der Speichereinrichtung gespeicherten Bedien-Informationen abgeglichen werden, sodass beispielsweise ermittelt werden kann, ob eine der Steuereinrichtung zugehende Steuer-Nachricht einer Bedien-Information zugeordnet werden kann und damit einer Bedieneraktion des Bediensystems.

So kann gegebenenfalls beispielsweise nachvollzogen werden, welche Steueraktivität der Steuereinrichtung von welchem Bediener, aus welchem Anlass und/oder mit welchen Parametern veranlasst wurde. Dies verbessert die Sicherheit und/oder Fehlerbehandlung eines solchen Automatisierungssystems. Weiterhin kann auf diese Weise beispielsweise auch eine Steuernachricht identifiziert werden, welche nicht über das Bediensystem ausgelöst wurde und beispielsweise von einem unbekannten und/oder unautorisierten Bediensystem oder Computer stammt. Auf diese Weise können potenziell unautorisierte oder ungewünschte Einflussnahmen auf die Steuereinrichtung erkannt werden, was auch wiederum Sicherheit und/oder Fehlerbehandlung eines derartigen Automatisierungssystems verbessert.

Die Steuereinrichtung kann jede Datenverarbeitungseinrichtung sein, welche zur Steuerung eines Prozesses, eines Geräts und/oder einer Anlage vorgesehen und eingerichtet ist. Insbesondere kann eine Steuereinrichtung ein Computer, ein Personalcomputer, eine speicherprogrammierbare Steuerung (SPS), ein Industrie-PC oder eine ähnliche Datenverarbeitungseinrichtung sein. Auch Geräte mit integrierter ("embedded") Steuerung, wie z.B. intelligente Sensoren und/oder Aktoren oder Motorsteuerungs- und/oder -überwachungsgeräte bzw. - module können z.B. Steuereinrichtungen im Rahmen der vorliegenden Erfindung sein.

Das Steuerprogramm kann beispielsweise als ein Ablaufprogramm für eine Steuereinrichtung gemäß der vorliegenden Beschreibung zur Steuerung des Prozesses, des Geräts und/oder der Anlage ausgebildet und eingerichtet sein. Ein derartiges Steuerprogramm kann beispielsweise mittels eines sogenannten "Engineering-Systems" erstellt werden. Ein solches Engineering-System kann beispielsweise auf der als Steuereinrichtung ausgebildeten Datenverarbeitungseinrichtung selbst installiert sein oder auf einem davon gesonderten Datenverarbeitungssystem und dann auf die Steuereinrichtung überspielt werden.

Das Bediensystem kann beispielsweise ein oder mehrere sogenannte Bedien-Panels, ein oder mehrere Bedien-Terminals und/oder ein oder mehrere PCs zum Überwachen und/oder Beinflussen der Steuereinrichtung bzw. des über die Steuereinrichtung gesteuerten Prozesses, des Geräts und/oder der Anlage umfassen. Weiterhin kann das Bediensystem beispielsweise als ein sogenanntes "Human-Machine-Interface" (HMI) ausgebildet sein. Das Bediensystem kann zudem beispielsweise auch als sogenanntes Bedienen-und-Beobachten-System und/oder auch als sogenanntes SCADA-System (SCADA: Supervisory Control and Data Acquisition) ausgebildet und eingerichtet sein.

Ein Bediensystem kann beispielsweise aus einem oder mehreren Computern bzw. Bedien-Panels oder ähnlichem bestehen, welche beispielsweise über ein Kommunikationsnetz, ein Automatisierungsnetz, das Internet oder vergleichbare Datennetze, untereinander verbunden sein können. Das Bediensystem kann mit der Steuereinrichtung beispielsweise über eine Kommunikationsverbindung, ein Automatisierungsnetz oder ein Kommunikationsnetz verbunden sein.

Zum Überwachen der Steuereinrichtung bzw. des Prozesses, des Geräts und/oder der Anlage kann das Bediensystem beispielsweise zum Auslesen von Zuständen, Parametern, Zustandsgrößen und/oder Meßwerten, zur Kontrolle eingestellter Parameter, zur Plausibilisierung von ermittelten Zuständen, zur Fehlerüberwachung oder vergleichbaren Vorgängen ausgebildet und eingerichtet sein.

Zum Beeinflussen der Steuereinrichtung bzw. des Prozesses, des Geräts und/oder der Anlage kann das Bediensystem weiterhin beispielsweise zum Vorgeben oder Einstellen von Parametern oder Werten, zum Stoppen und/oder Starten von Vorgängen, Prozessen, Anlagen, Geräten und/oder Teilen davon und/oder zur Ausführung von vergleichbaren Vorgängen ausgebildet und eingerichtet sein.

Die Speichereinrichtung zur Speicherung von Bedien-Informationen kann beispielsweise als elektronische Speichereinrichtung innerhalb der Steuereinrichtung, des Bediensystems und/oder auch innerhalb einer gesonderten Datenverarbeitungseinrichtung vorgesehen, ausgebildet und eingerichtet sein.

Dabei kann die Speichereinrichtung beispielsweise Teil eines sogenannten "Intrusion-Detection-Systems" zur Erkennung von unautorisierten Vorgängen innerhalb eines Automatisierungssystems ausgebildet und eingerichtet sein, wobei innerhalb dieses Intrusion-Detection-Systems beispielsweise die Bedien-Informationen als sogenannter "Audit-Trail" vorliegen können, bzw. gespeichert sein können. Unter einem "Audit-Trail" werden dabei allgemein mitprotokollierte Bedienaktionen von Benutzern eines Systems und/oder Benutzereingriffe in das System verstanden.

Bedien-Aktionen eines Benutzers des Bediensystems können beispielsweise das Eingeben, Ändern und/oder Löschen von Daten sein. Insbesondere können derartige Bedien-Aktionen das Eingeben, Ändern und/oder Löschen von Daten sein, welche der Steuereinrichtung bzw. der gesteuerten Lage, des gesteuerten Prozesses und/oder des gesteuerten Geräts zugeordnet sind. Weiterhin können Bedien-Aktionen bzw. ein Starten, Stoppen und/oder ein Einzelschritt-Betrieb eines Vorgangs oder Prozesses sein. Bedien-Aktionen können auch die Änderung von Konfigurationen bzgl. der Steuereinrichtung, des gesteuerten Prozesses, des gesteuerten Geräts und/oder der gesteuerten Anlage oder auch eine Änderung von diesbezüglichen Dokumenten sein.

Bedien-Informationen bzgl. einer Bedien-Aktion gemäß der vorliegenden Beschreibung können beispielsweise eine Information bzw. Identifikationsinformation über einen Benutzer, die eingegebenen, geänderten und/oder gelöschten Daten und/oder eine Zusatzinformation diesbezüglich, ein Änderungsdatum, eine Änderungszeit, eine Autorisierungsinformation, eine Information über das Bediensystem und/oder weitere Informationen bzgl. der zugeordneten Bedien-Aktion umfassen. Insbesondere können die Bedien-Informationen diejenigen Informationen umfassen, welche im Rahmen der Aufzeichnungen eines "Audit-Trails" üblicherweise verwendet werden oder erforderlich sind, um beispielsweise bestimmte Vorgaben zu erfüllen. Solche Vorgaben können beispielsweise von Standards gegeben sein oder auch gesetzlich oder von einem Benutzer eines Systems vorgegeben sein.

Die Überwachungseinrichtung kann beispielsweise als gesonderte Datenverarbeitungseinrichtung ausgebildet sein oder auch Teil der Steuereinrichtung oder des Bediensystems sein. Insbesondere kann die Überwachungseinrichtung als ein sogenanntes "Intrusion-Detection-System" ausgebildet sein, insbesondere als ein "Intrusion-Detection-System" gemäß der vorliegenden Beschreibung ausgebildet und eingerichtet sein.

Zum Speichern einer an die Steuereinrichtung übertragenen Steuer-Nachricht kann die Überwachungseinrichtung kommunikativ beispielsweise derart mit der Steuereinrichtung gekoppelt sein, dass sie an die Steuereinrichtung gesendete Nachrichten, insbesondere Steuer-Nachrichten, erkennen kann. Dies kann beispielsweise so vorgesehen sein, dass die Überwachungseinrichtung der Steuereinrichtung zugehende Nachrichten, insbesondere alle der Steuereinrichtung zugehende Nachrichten, mithören kann. Dabei kann ein solches "Mithören" gemäß den in der Kommunikationstechnik üblichen Verfahren ausgeführt sein.

Insbesondere kann vorgesehen sein, dass in der Überwachungseinrichtung eine Netzwerkadresse der Steuereinrichtung bekannt ist und anhand dieser der Steuereinrichtung zugehende Nachrichten erkannt werden können.

Im Falle einer von der Steuereinrichtung und dem Bediensystem baulich getrennten Überwachungseinrichtung kann die Überwachungseinrichtung beispielsweise derart in ein mit der Steuereinrichtung bzw. dem Bediensystem verbundenen Kommunikationsnetz eingebunden sein, dass die Überwachungseinrichtung den entsprechenden Datenverkehr auf diesem Kommunikationsnetz mithören und auswerten kann.

Eine Steuer-Nachricht kann dabei als ein Schreibbefehl oder Schreib-Zugriff auf die Steuereinrichtung bzw. einen Speicherbereich der Steuereinrichtung ausgebildet sein bzw. derartige Befehle umfassen. Solche Schreibbefehle könnten beispielsweise zum Speichern von Parametern, Werten oder sonstigen Daten in der Steuereinrichtung eingerichtet und vorgesehen sein. Weiterhin kann eine Steuer-Nachricht auch Steuerbefehle, wie beispielsweise zum Starten, Stoppen oder auch schrittweisen Ablauf von Vorgängen, Steuerprogrammen oder Ähnlichem ausgebildet sein bzw. derartige Befehle umfassen.

Zur Erkennung einer an die Steuereinrichtung gerichteten Steuer-Nachricht, bzw. allgemein einer an die Steuereinrichtung gerichteten Nachricht, kann in der Überwachungseinrichtung beispielsweise eine Kennung oder Adresse der Steuereinrichtung gespeichert sein, beispielsweise eine Netzwerkadresse, eine IP-Adresse, eine MAC-Adresse und/oder sonstige vergleichbare in derartigen Nachrichten verwendeten Adressen.

Weiterhin kann die Überwachungseinrichtung zur Erkennung von an die Steuereinrichtung gerichteten Nachrichten ausgebildet und eingerichtet sein, insbesondere zur Erkennung von an die Steuereinrichtung gerichteten Steuer-Nachrichten. Die Überwachungseinrichtung kann beispielsweise insbesondere auch zur Erkennung von Steuer-Nachrichten gemäß der vorliegenden Beschreibung ausgebildet und eingerichtet sein.

Eine Warn-Aktivität, wenn keine der Steuer-Nachricht zugeordnete Bedien-Information erkannt wurde, kann beispielsweise eine Ausgabe einer Nachricht umfassen bzw. aus einer solchen bestehen. Insbesondere kann eine derartige Nachricht eine Information bzgl. eines erkannten, keiner Bedien-Aktion zuordenbaren Vorgangs umfassen, z.B. eine Information bezüglich erkannten, eines nicht autorisierten Bedien-Vorgangs. Eine derartige Nachricht kann beispielsweise als digitale Information (z.B. als E-Mail, elektronische Nachricht, SMS o.ä.) oder auch über eine Ausgabeeinrichtung des Bediensystems, eine Ausgabeeinrichtung der Steuereinrichtung oder eine der Überwachungseinrichtung unmittelbar zugeordnete Ausgabeeinrichtung ausgegeben werden. So kann die Überwachungseinrichtung beispielsweise einen Webserver umfassen, über welche dann derartige Informationen zugänglich sein oder verbreitet werden können.

Weitere Warnaktivitäten können beispielsweise das Ausgeben entsprechender Warn-Signale, das Stoppen eines Programms oder Programmteils bzw. eines Anlagen- und/oder Geräteteils, das Bringen einer Anlage oder eines Geräts bzw. Teilen davon in einen sicheren Zustand oder ähnliche Aktivitäten umfassen. Die Warn-Aktivität kann auch als Eintrag einer entsprechenden Information über das Feststellen einer keiner Bedieninformation zugeordneten Steuer-Nachricht in einer entsprechenden Datenbank, Liste oder ähnlichen Speichereinrichtung oder einem ähnlichen Dokument ausgebildet und eingerichtet sein.

Das Automatisierungssystem kann ein Automatisierungs-Kommunikationsnetz umfassen, wobei das Bediensystem und die Steuereinrichtung über das Automatisierungs-Kommunikationsnetz verbunden sind. Insbesondere kann das Automatisierungs-Kommunikationsnetz derart ausgebildet und mit Bediensystem und Steuereinrichtung verbunden sein, dass Nachrichten, insbesondere Steuernachrichten an die Steuereinrichtung zumindest teil- oder abschnittsweise über dieses Automatisierungs-Kommunikationsnetz übertragen werden. Insbesondere kann das Automatisierungs-Kommunikationsnetz derart ausgebildet und eingerichtet sein, dass, zumindest unter Anderem, Steuer-Nachrichten vom Bediensystem an die Steuereinrichtung zumindest teilweise über das Automatisierungs-Kommunikationsnetz übertragen werden.

Dabei kann das Automatisierungs-Kommunikationsnetz beispielsweise als ein Ethernet, ein Internet, ein Profinet, ein Profibus oder ein vergleichbares Netzwerk sein beziehungsweise zur Kommunikation über entsprechende Kommunikations-Protokolle ausgebildet und eingerichtet sein.

Weiterhin kann das Automatisierungssystem derart ausgestaltet und eingerichtet sein, dass alle innerhalb des Automatisierungs-Kommunikationsnetzes an die Steuereinrichtung gerichteten Nachrichten auch der Überwachungseinrichtung zugeführt werden.

Auf diese Weise kann erreicht werden, dass die Überwachungseinrichtung alle an die Steuereinrichtung gehenden Nachrichten bekommt und somit auch analysieren kann. Dies erhöht die Sicherheit beziehungsweise die Fehlerbehandlung eines entsprechenden Automatisierungssystems weiter.

Die Überwachungseinrichtung kann beispielsweise als separate Einheit innerhalb des Automatisierungs-Kommunikationsnetzes vorgesehen sein. Dabei kann die Einbindung in das Automatisierungs-Kommunikationsnetz derart vorgesehen sein, dass der Überwachungseinrichtung zumindest alle an die Steuereinrichtung gerichteten Nachrichten ebenfalls zugehen. Dies kann beispielsweise erreicht werden, indem die Überwachungseinrichtung derart mit einem Netzknoten innerhalb des Automatisierungs-Kommunikationsnetzes verbunden ist, dass über diesen Netzknoten beispielsweise die gesamte darüber laufende Kommunikation, oder auch nur die speziell an die Steuereinrichtung gerichtete Kommunikation, auch der Überwachungseinrichtung zugeleitet wird.

Weiterhin kann die Überwachungseinrichtung beispielsweise derart in das Automatisierungs-Kommunikationsnetz eingebunden sein, dass die Kommunikation zur Steuereinrichtung über die Überwachungseinrichtung geleitet wird.

Wenn die Überwachungseinrichtung als Teil der Steuereinrichtung oder als Teil des Bediensystems ausgebildet und eingerichtet ist, können weitere fachübliche Maßnahmen vorgesehen sein, um der Steuereinrichtung zugehende Nachrichten auch der Überwachungseinrichtung zuzuführen.

Das Bediensystem kann beispielsweise eine Benutzerschnittstelle zum Überwachen und/oder Beeinflussen von zumindest Teilen des Prozesses, des Geräts und/oder der Anlage aufweisen. Dabei kann das Bediensystem derart ausgebildet und eingerichtet sein, dass zu jeder Benutzereingabe über die Benutzerschnittstelle eine Bedien-Information erzeugt wird. Insbesondere kann zu jeder Benutzereingabe über die Benutzerschnittstelle zur Beeinflussung der zumindest Teile des Prozesses, des Geräts und/oder der Anlage vom Bediensystem eine Bedien-Information erzeugt werden.

Dabei kann die Benutzerschnittstelle beispielsweise als so genanntes "Human-Machine-Interface" (HMI), als Bedien-Panel, als Tablet, als mobiles Kommunikationsgerät, als Eingabe-Terminal, als Monitor oder eine vergleichbare Ein-/ oder Ausgabe-Einrichtung ausgebildet und eingerichtet sein. Zur Eingabe von Informationen kann die Benutzerschnittstelle beispielsweise eine Tastatur, einen berührungsempfindlichen Bereich, eine Spracheingabemöglichkeit und/oder eine vergleichbare Eingabevorrichtung umfassen.

Zum Überwachen und/oder Beeinflussen von zumindest Teilen des Prozesses, des Geräts und/oder der Anlage kann die Benutzerschnittstelle beispielsweise für prozess-, geräte- und/oder anlagenspezifische Symbole, Zeichnungen oder Diagramme mit entsprechenden Feldern oder Bedientools zur Eingabe von Parametern, Werten, Daten oder Aktionen anzeigen. Diese können dann z.B. über entsprechend zugeordnete Eingabeelemente bedient werden. Beispielsweise können derartigen Prozessen, Geräten und/oder Anlagen, beziehungsweise Teilen davon, ein oder mehrere so genannte "Faceplates" auf einer Anzeigeeinrichtung der Benutzerschnittstelle zugeordnet sein, welche zur Anzeige und/oder Beeinflussung von Parametern des Prozesses, des Geräts und/oder der Anlage ausgebildet und eingerichtet sein können.

Eine Benutzereingabe über die Benutzerschnittstelle ist ein Beispiel für eine Bedien-Aktion gemäß der vorliegenden Beschreibung. Dabei kann die in diesem Zusammenhang erzeugt Bedien-Information gemäß der vorliegenden Beschreibung ausgebildet und eingerichtet sein.

In einer vorteilhaften Ausgestaltung kann die Warn-Aktivität eine Erzeugung und/oder Ausgabe einer Warn-Information bezüglich einer möglicherweise unzulässigen Einflussnahme auf die Steuereinrichtung umfassen. Dabei kann die Warn-Information beispielsweise eine Ausgabe eines Alarms, eines Alarmsignals und/oder einer Alarmnachricht umfassen. Weiterhin kann die Ausgabe einer Warn-Information ein Erzeugen einer Text-Nachricht zur Ausgabe an einen Benutzer, z.B. über das Bediensystem oder die Steuereinrichtung umfassen. Die Warn-Information kann zudem ein Leucht-, Blink-, und/oder Ton-Signal umfassen.

Beispielsweise kann die Warn-Aktivität auch ein Bringen des Prozesses, des Geräts und/oder Anlage - oder Teilen davon - in einem sicheren Zustand umfassen. Unter einem "sicheren Zustand" kann dabei beispielsweise ein sicherer Anlagenzustand gemäß einem so genannten "Failsafe"-Standard (z.B. DIN V 19250/DIN V VDE 0901, IEC 61058 oder EN 954-1) verstanden werden.

Die Warn-Aktivität kann weiterhin ein Stoppen des Prozesses, des Geräts und/oder der Anlage - oder Teilen davon - umfassen.

Die vorstehend genannte Aufgabe wird weiterhin gelöst durch ein Verfahren zur Überwachung einer Steuereinrichtung, wobei die Steuereinrichtung zur Steuerung eines Prozesses, eines Geräts und/oder einer Anlage, insbesondere mittels eines in der Steuereinrichtung gespeicherten Steuerprogramms, ausgebildet und eingerichtet ist. Dabei ist weiterhin ein z.B. kommunikativ mit der Steuereinrichtung gekoppeltes Bediensystem vorgesehen, das zum Überwachen und/oder Beeinflussen der Steuereinrichtung ausgebildet und eingerichtet ist. Zudem ist eine Speichereinrichtung zur Speicherung von Bedien-Informationen vorgesehen, wobei jeweils eine Bedien-Information einer Bedien-Aktion eines Benutzers des Bediensystems zugeordnet ist. Das Verfahren umfasst dabei die folgenden Schritte:
- Speichern einer an die Steuereinrichtung übertragenen Steuer-Nachricht in einer Überwachungseinrichtung,
- Suchen nach einer der Steuer-Nachricht zugeordneten Bedien-Information innerhalb der in der Speichereinrichtung gespeicherten Bedien-Informationen,
- Initiieren einer Warn-Aktivität, wenn keine der SteuerNachricht zugeordneten Bedien-Informationen innerhalb der in der Speichereinrichtung gespeicherten Bedien-Informationen gefunden wurde.

Durch den Abgleich der an die Steuereinrichtung übertragenen Steuer-Nachrichten mit den Bedien-Informationen im zugeordneten Bediensystem, lässt sich auch mit dem genannten Verfahren die Sicherheit und/oder die Fehlerbehandlung in entsprechenden Automatisierungssystemen verbessern. Hierbei können beispielsweise unautorisierte Steuer-Nachrichten an die Steuereinrichtung identifiziert werden, womit z.B. möglicherweise unautorisierte, fehlerhafte oder nicht abgestimmte Steuerungsvorgänge erkannt und gegebenenfalls bekannt gemacht werden können.

Die Steuereinrichtung, das Bediensystem, die Speichereinrichtung, die Überwachungseinrichtung, sowie die SteuerNachricht, die Bedien-Information sowie die Warn-Aktivität, können dabei gemäß der vorliegenden Beschreibung ausgebildet und eingerichtet sein.

In einer weiteren Ausgestaltung des Verfahrens kann ein Automatisierungs-Kommunikationsnetz vorgesehen sein, wobei das Bediensystem und die Steuereinrichtung über das Automatisierungs-Kommunikationsnetz verbunden sind und die SteuerNachricht vermittels des Automatisierungs-Kommunikationsnetzes an die Steuereinrichtung übertragen wird. Es kann weiterhin vorgesehen sein, dass auch weitere Nachrichten von, bzw. an die Steuereinrichtung über das Automatisierungs-Kommunikationsnetz übermittelt werden.

Weiterhin können Automatisierungs-Kommunikationsnetz und Steuereinrichtung derart ausgebildet und eingerichtet sein, dass die gesamte Kommunikation der Steuereinrichtung mit externen Kommunikationspartnern zumindest teilweise über das Automatisierungs-Kommunikationsnetz abläuft.

Weiterhin kann das Automatisierungs-Kommunikationsnetz, das Bediensystem und/oder die Steuereinrichtung derart ausgestaltet und eingerichtet sein, dass alle innerhalb des Automatisierungs-Kommunikationsnetzes an die Steuereinrichtung gerichteten Nachrichten auch der Überwachungseinrichtung zugeführt werden.

Damit kann beispielsweise erreicht werden, dass vermittels der Überwachungseinrichtung sämtliche der Steuereinrichtung zugehende Nachrichten analysiert werden können und so möglicherweise unautorisierte, nicht von einem Benutzer über das Bediensystem erzeugte Steuer-Nachrichten unerkannt der Steuereinrichtung zugehen. Auf diese Weise kann die Sicherheit und/oder die Fehlerbehandlung in einem entsprechenden Automatisierungssystem weiter verbessert werden.

Dabei kann das Automatisierungs-Kommunikationsnetz weiterhin gemäß der vorliegenden Beschreibung ausgebildet und eingerichtet sein.

Das Bediensystem kann beispielsweise eine Benutzerschnittstelle zum Beeinflussen von zumindest Teilen des Prozesses, des Geräts und/oder der Anlage aufweisen. Dabei kann vorgesehen sein, dass das Verfahren weiterhin den nachfolgenden Verfahrensschritt umfasst:
- Erzeugen einer Bedien-Information zu einer Benutzereingabe über die Benutzerschnittstelle.

Insbesondere kann eine Bedien-Information zu jeder Benutzereingabe erzeugt werden. Weiterhin kann eine Bedien-Information zu einer oder jeder Benutzereingabe erzeugt werden, die zur Beeinflussung der zumindest Teile des Prozesses, des Geräts und/oder der Anlage vorgesehen und/oder geeignet ist.

Die Bedien-Informationen sowie die Benutzerschnittstelle können weiterhin gemäß der vorliegenden Beschreibung ausgebildet und eingerichtet sein.

In einer vorteilhaften Ausgestaltung des Verfahrens kann die Warn-Aktivität zumindest einen der nachfolgenden Verfahrensschritte umfassen:
- Erzeugen und/oder Ausgeben einer Warn-Information, insbesondere einer Warn-Information bezüglich einer möglicherweise unzulässigen Einflussnahme auf die Steuereinrichtung;
- Bringen des Prozesses, des Geräts und/oder der Anlage - oder Teilen davon - in einen sicheren Zustand;
- Stoppen des Prozesses, des Geräts und/oder der Anlage - oder Teilen davon.

Dabei können die Ausgestaltungen für die Warn-Aktivität weiterhin gemäß der vorliegenden Beschreibung ausgestaltet sein.

Nachfolgend wird die Erfindung beispielhaft mit Bezug auf die beigefügte Figur näher erläutert:

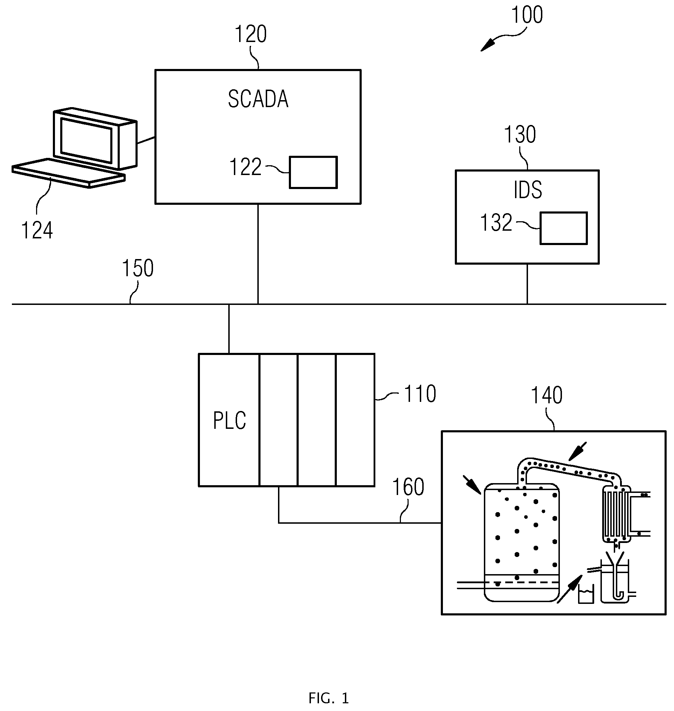

Es zeigt
Fig. 1: Beispiel für ein Automatisierungssystem mit einem sogenannten "Intrusion-Detection-System" (IDS).

Fig. 1 zeigt ein Automatisierungssystem 100 mit einer speicherprorammierbaren Steuerung (SPS bzw. PLC) 110, die über einen Feldbus 160 eine Anlage 140 steuert.

Zum Bedienen und Beobachten der PLC 110 ist ein SCADA-System 120 vorgesehen, welches über ein Automatisierungsnetz 150 bzw. Kommunikationsnetz 150 mit der PLC 110 verbunden ist. Über ein Terminal 124 kann ein Bediener sowohl Anlagen-Daten der gesteuerten Anlage 140 überwachen, als auch über eine Tastatur des Terminals 124 die Anlage beeinflussen. Die Beeinflussung kann dabei dadurch geschehen, dass beispielsweise bestimmte Parameter- oder Prozesswerte, wie Temperaturen oder Ähnliches, gesetzt werden können und/oder auch Antriebe, z.B. bei Ventilen, gesteuert werden können. Das SCADA-Sysem 120 weist eine Speichereinrichtung 122 zur Speicherung eines so genannten "Audit-Trails" auf, innerhalb welchem alle Eingaben in das SCADA-Sysem, die ein Benutzer über das Terminal 124 tätigt, protokolliert werden. Dabei wird zu jeder Benutzereingabe eine Kennung für den Benutzer, beispielsweise sein Name und/oder Personalnummer o.ä., eine Zeit der Eingabe, ein Datum der Eingabe sowie eine Information oder Kennung bezüglich der vorgenommenen Eingabe sowie - falls vorliegend - ein entsprechend eingegebener Wert, gespeichert.

Weiterhin ist in das Automatisierungsnetz 150 ein so genanntes "Intrusion-Detection-System" (IDS) 130 integriert, welches derart in das Automatisierungsnetz 150 eingebunden ist, dass es die gesamte, über das Automatisierungsnetz 150 ablaufende Kommunikation mithört. Alternativ kann das "Intrusion-Detection-System" (IDS) 130 auch derart in das Automatisierungsnetz 150 integriert sein, dass es alle an die PLC 110 gerichteten Nachrichten mithören kann. Dies kann beispielsweise derart vorgenommen werden, dass im Automatisierungsnetz 150 vorgesehene weitere Netzknoten (nicht in Fig. 1 dargestellt) so eingerichtet sind, dass alle Nachrichten, welche an eine Adresse der PLC 110 gehen, auch an die Adresse des "Intrusion-Detection-System" (IDS) 130 vermittelt werden.

Das "Intrusion-Detection-System" (IDS) 130 umfasst weiterhin eine Speichereinrichtung 132 zur Speicherung von für die PLC 110 vorgesehenen Steuernachrichten. Zum Erkennen solcher Nachrichten umfasst das "Intrusion-Detection-System" 130 weiterhin Mittel zur Erkennung von Steuer-Nachrichten an die PLC 110. Diese Mittel zur Erkennung solcher Steuernachrichten können beispielsweise anhand der Adresse der PLC 110 innerhalb der Nachricht erkennen, dass diese für die PLC 110 vorgesehen ist. Weiterhin kann z.B. anhand des Inhalts einer analysierten Nachricht durch diese Analysemittel entschieden werden, ob es sich dabei um eine Steuer-Nachricht oder eine sonstige Nachricht an die PLC 110 handelt.

So können Steuer-Nachrichten beispielsweise daran erkannt werden, dass sie entsprechende Schreib-Befehle, z.B. zum Setzen von Parametern oder Setzen von Flags oder auch zur Beeinflussung oder Änderung eines Steuerprogramms umfassen. Weiterhin können Steuer-Nachrichten z.B. auch daran erkannt werden, dass sie unmittelbar durch die Steuereinrichtung ausführbare Befehle umfassen. Andere, nicht als SteuerNachrichten vorgesehene Nachrichten, können beispielsweise zum Auslesen von Parametern, Werten oder sonstigen Informationen aus der Steuereinrichtung vorgesehen sein.

Weiterhin umfasst das "Intrusion-Detection-System" (IDS) 130 Vergleichsmittel zum Abgleich einer über die Analysemittel erkannten und in der Speichereinrichtung 132 gespeicherten Steuernachricht für die PLC 110 mit den in der Speichereinrichtung 122 des SCADA-Sysems 120 gespeicherten Informationen im Audit-Trail. Dabei wird untersucht, ob einer gerade detektierten Steuer-Nachricht eine im Audit-Trail 122 gespeicherte entsprechende Benutzerhandlung zugeordnet werden kann.

Ist dies der Fall, das heißt, im Audit-Trail 122 findet sich ein Eintrag bezüglich einer Benutzerhandlung, die einem im "Intrusion-Detection-System" 130 erkannten Steuerbefehl an die PLC 110 zugeordnet werden kann, so kann dies gegebenenfalls im "Intrusion-Detection-System" 130 festgehalten werden. Es werden ansonsten durch das IDS 130 keine weiteren Maßnahmen ergriffen.

Kann zu einem im "Intrusion-Detection-System" 130 erkannten Steuerbefehl an die PLC 110 kein entsprechend zuordenbarer Eintrag im Audit-Trail 122 gefunden werden, so wird durch das "Intrusion-Detection-System" 130 über das Kommunikationsnetz 150 eine entsprechende Warn-Nachricht an das SCADA-System 120 geschickt und über das Terminal 124 an den Benutzer ausgegeben. Eine solche Nachricht kann beispielsweise die Information umfassen, dass ein Zugriff auf die PLC 110 über das Automatisierungsnetz 150 festgestellt wurde, welche nicht vom zugeordneten SCADA-System 120 erzeugt wurde. Daraufhin kann ein Benutzer z.B. entsprechende Maßnahmen ergreifen, wie beispielsweise untersuchen, ob es sich dabei um einen unautorisierten, unzulässigen und/oder verbotenen Zugriff auf die PLC 110 handelte.

Nachfolgend wird beispielhaft nochmals ein möglicher Ablauf einer Benutzereingabe in das SCADA-System 120 dargestellt. Ein Benutzer kann beispielsweise am Terminal 124 des SCADA-Systems 120 eine Temperatur eines Kessels in der über die PLC 110 gesteuerten Anlage 140 einstellen, indem er einen entsprechenden Temperaturwert über das Terminal 124 eingibt. Im SCADA-System 120 wird dann ein dieser Eingabe entsprechender Audit-Trail-Datensatz erzeugt, welcher die Identifikationsdaten des Benutzers, die Uhrzeit und das Datum der Eingabe sowie ein Identifikationsdatum für "Kesseltemperatur" und der eingegebene Temperaturwert in der Speichereinrichtung 122 für den Audit-Trail als ein Audit-Trail-Datensatz gespeichert.

Das SCADA-System 120 erzeugt dann weiterhin eine entsprechende Steuernachricht an die PLC 110, welche als Adresse ein IP-Adresse der PLC 110 umfasst, sowie einen Schreibbefehl, um den eingegebenen Temperaturwert in eine diesem Temperaturwert zugeordnete Speicherzelle der PLC 110 zu schreiben. Diese Nachricht wird an das Automatisierungsnetz 150 ausgegeben und über dieses sowohl der PLC 110, als auch dem "Intrusion-Detection-System" 130 zugeleitet.

Im "Intrusion-Detection-System" 130 wird anhand der Adresse erkannt, dass es sich um eine Nachricht für die PLC 110 handelt. Anhand des Schreib-Befehls erkennt das "Intrusion-Detection-System" 130 weiterhin, dass es sich um eine SteuerNachricht handelt und speichert diese im entsprechenden Speicherbereich 132 des "Intrusion-Detection-System" 130.

Über das Kommunikationsnetz 150 greift das "Intrusion-Detection-System" 130 nun auf den Audit-Trail 122 des SCADA-Systems 120 zu und findet dabei den vorstehend erwähnten Datensatz, in welchem die Eingabe des in der Nachricht festgestellten Temperaturwerts in zeitlich passendem Rahmen zur Versendung der Nachricht protokolliert wurde. Dann wird dieser in der Speichereinrichtung 132 des "Intrusion-Detection-System" 130 gespeicherten Steuernachricht eine entsprechende Freigabe-Information zugeordnet und weiterhin nichts unternommen.

Die genannte Steuer-Nachricht wird gleichzeitig auch der PLC 110 zugeführt, wobei die Steuernachricht bewirkt, dass der damit übermittelte Temperaturwert in der PLC 110 als Zielwert für die Temperatur des entsprechenden Kessels in der Anlage 140 gespeichert wird.

Hätte das "Intrusion-Detection-System" 130 stattdessen die Kopie einer einen Steuerbefehl umfassenden, an die PLC 110 gerichteten Nachricht erhalten, und hätte das "Intrusion-Detection-System" 130 dazu keinen passenden Eintrag im Audit-Trail 122 identifizieren können, so wäre vom "Intrusion-Detection-System" 130 eine entsprechende Warn-Nachricht z.B. an einen Benutzer des SCADA-Systems 120 gegangen, wie vorstehend bereits näher ausgeführt.

Die vorliegende Erfindung umfasst ein System z.B. zum Erkennen von unautorisierten Zugriffen auf Steuereinrichtungen eines Automatisierungssystems. Dazu werden Einträge in einem einem Bediensystem für diese Steuereinrichtungen zugeordneten Audit-Trail mit den diesen Steuereinrichtungen zugehenden Nachrichten abgeglichen. Damit kann z.B. erkannt werden, welche dieser Nachrichten vom Bediensystem an die Steuereinrichtungen gesendet wurden, und welche der Nachrichten möglicherweise von unautorisierten Quellen stammen könnten.

Mittels der vorliegenden Erfindung können z.B. unter anderem Sicherheits-Aspekte zu einer bestehenden Steuer- oder Automatisierungseinrichtung bzw. einem Automatisierungssystem hinzugefügt werden. So kann ein Hinzufügen von derartigen Sicherheitsaspekten gemäß der vorliegenden Erfindung beispielsweise durch das Einrichten einer Erfassung eines sogenannten "Audit-Trails" gemäß der vorliegenden Beschreibung, z.B. innerhalb eines zugehörigen HMI- oder SCADA-Systems, im Zusammenhang mit der Einrichtung eines sogenannten "Intrusion Detection Systems" gemäß der vorliegenden Beschreibung erfolgen.

Da eine Vielzahl von Automatisierungssystemen, z.B. im Bereich der Prozessautomatisierung, bereits zur Erfassung eines sogenannten "Audit-Trails" aus anderen Gründen eingerichtet sind, ist in solchen Systemen unter Umständen sogar nur das Implementieren und Einrichten eines sogenannten "Intrusion Detection Systems" gemäß der vorliegenden Beschreibung erforderlich, um die genannten zusätzlichen Sicherheitsaspekte zu implementieren. Unter Umständen kann in diesen Fällen z.B. aber auch noch eine inhaltlichen Änderungen und/oder Erweiterungen des bestehenden Audit-Trails erforderlich sein. Auf diese Weise können z.B. Sicherheitsaspekte zu derartigen Systemen mit vergleichsweise geringem Aufwand hinzugefügt werden.

Gemäß der vorliegenden Beschreibung kann die vorliegende Erfindung z.B. in bestehenden Systemen u.a. auch implementiert werden, ohne in in solchen Systemen vorliegende Steuereinrichtungen unmittelbar einzugreifen - oder auch mit vergleichsweise geringen Eingriffen in die vorliegenden Steuereinrichtungen. Auch dies vereinfacht z.B. das Hinzufügen von Sicherheits-Aspekten zu bestehenden Anlagen, da ein derartiges Hinzufügen von Sicherheitsaspekten zu einem Automatisierungssystem z.B. auch bei älteren oder einfacheren Steuerungseinrichtungen im System relativ einfach möglich ist.

## Patentansprüche

1. Automatisierungssystem (100) zur Steuerung eines Prozesses, eines Geräts und/oder einer Anlage (140), umfassend eine Steuereinrichtung (110) zur Steuerung des Prozesses, des Geräts und/oder der Anlage (140), insbesondere mittels eines in der Steuereinrichtung (110) gespeicherten Steuerprogramms,
ein mit der Steuereinrichtung (110) kommunikativ gekoppeltes Bediensystem (120, 122, 124) zum Überwachen und/oder Beeinflussen der Steuereinrichtung (110),
eine Speichereinrichtung (122) zur Speicherung von Bedien-Informationen, wobei jeweils eine Bedien-Information einer Bedien-Aktion eines Benutzers des Bediensystems (120, 122, 124) zugeordnet ist, sowie
eine Überwachungseinrichtung (130, 132), die
- zum Speichern einer an die Steuereinrichtung (110) übertragen Steuer-Nachricht,
- zur Suche nach einer der Steuer-Nachricht zugeordneten Bedien-Information innerhalb der in der Speichereinrichtung (122) gespeicherten Bedien-Informationen sowie
- zum Initiieren einer Warn-Aktivität, wenn keine der Steuer-Nachricht zugeordnete Bedien-Information innerhalb der in der Speichereinrichtung (122) gespeicherten Bedien-Informationen gefunden wurde,
ausgebildet und eingerichtet ist.

2. Automatisierungssystem gemäß Anspruch 1,
**dadurch gekennzeichnet,**
**dass** das Automatisierungssystem (100) ein Automatisierungs-Kommunikationsnetz (150) umfasst, wobei das Bediensystem (120, 122, 124) und die Steuereinrichtung (110) über das Automatisierungs-Kommunikationsnetz (150) verbunden sind.

3. Automatisierungssystem gemäß Anspruch 2,
**dadurch gekennzeichnet,**
**dass** das Automatisierungssystem (100) derart ausgestaltet und eingerichtet ist, dass alle innerhalb des Automatisierungs-Kommunikationsnetzes (150) an die Steuereinrichtung (110) gerichteten Nachrichten auch der Überwachungseinrichtung (130, 132) zugeführt werden.

4. Automatisierungssystem gemäß einem der vorstehenden Ansprüche,
**dadurch gekennzeichnet,**
**dass** das Bediensystem (120, 122, 124) eine Benutzerschnittstelle (124) zum Überwachen und/oder Beeinflussen von zumindest Teilen des Prozesses, des Gerätes und/oder der Anlage (140) aufweist, wobei das Bediensystem (120, 122, 124) derart ausgebildet und eingerichtet ist, dass zu jeder Benutzereingabe über die Benutzerschnittstelle (124) zur Beeinflussung der zumindest Teile des Prozesses, des Geräts und/oder der Anlage (140) vom Bediensystem eine Bedien-Information erzeugt wird.

5. Automatisierungssystem gemäß einem der vorstehenden Ansprüche,
**dadurch gekennzeichnet,**
**dass** die Warn-Aktivität
- eine Erzeugung und/oder Ausgabe einer Warn-Information bezüglich einer möglicherweise unzulässigen Einflussnahme auf die Steuereinrichtung (110), und/oder
- ein Bringen des Prozesses, des Geräts und/oder der Anlage (140), oder Teilen davon, in einen sicheren Zustand, und/oder
- ein Stoppen des Prozesses, des Geräts und/oder der Anlage (140), oder Teilen davon,
umfasst.

6. Verfahren zur Überwachung einer Steuereinrichtung (110), wobei
die Steuereinrichtung (110) zur Steuerung eines Prozesses, eines Geräts und/oder einer Anlage (140), insbesondere mittels eines in der Steuereinrichtung (110) gespeicherten Steuerprogramms, ausgebildet und eingerichtet ist,
und wobei ein Bediensystem (120, 122, 124) vorgesehen ist, das zum Überwachen und/oder Beeinflussen der Steuereinrichtung (110) ausgebildet und eingerichtet ist, wobei weiterhin eine Speichereinrichtung (122) zur Speicherung von Bedien-Informationen vorgesehen ist, wobei jeweils eine Bedien-Information einer Bedien-Aktionen eines Benutzers des Bediensystems (120, 122, 124) zugeordnet ist,
**gekennzeichnet durch** die Schritte:
- Speichern einer an die Steuereinrichtung (110) übertragen Steuer-Nachricht in einer Überwachungseinrichtung (130, 132),
- Suche nach einer der Steuer-Nachricht zugeordneten Bedien-Information innerhalb der in der Speichereinrichtung (122) gespeicherten Bedien-Informationen,
- Initiieren einer Warn-Aktivität, wenn keine der SteuerNachricht zugeordneten Bedien-Information innerhalb der in der Speichereinrichtung (122) gespeicherten Bedien-Informationen gefunden wurde.

7. Verfahren gemäß Anspruch 6,
**dadurch gekennzeichnet,**
**dass** ein Automatisierungs-Kommunikationsnetz (150) vorgesehen ist, wobei das Bediensystem (120, 122, 124) und die Steuereinrichtung (110) über das Automatisierungs-Kommunikationsnetz (150) verbunden sind und die Steuer-Nachricht vermittels des Automatisierungs-Kommunikationsnetzes (150) an die Steuereinrichtung (110) übertragen wird.

8. Verfahren gemäß Anspruch 7,
**dadurch gekennzeichnet,**
**dass** das Automatisierungs-Kommunikationsnetz (150), das Bediensystem (120, 122, 124) und/oder die Steuereinrichtung (110) derart ausgestaltet und eingerichtet sind, dass alle innerhalb des Automatisierungs-Kommunikationsnetzes (150) an die Steuereinrichtung (110) gerichteten Nachrichten auch der Überwachungseinrichtung (130, 132) zugeführt werden.

9. Verfahren gemäß einem der Ansprüche 6 bis 8,
**dadurch gekennzeichnet,**
**dass** das Bediensystem (120, 122, 124) eine Benutzerschnittstelle (124) zum Beeinflussen von zumindest Teilen des Prozesses, des Gerätes und/oder der Anlage (140) aufweist, und
**dass** das Verfahren weiterhin den Verfahrensschritt umfasst:
- Erzeugen einer Bedien-Information zu einer Benutzereingabe über die Benutzerschnittstelle (124) zur Beeinflussung der zumindest Teile des Prozesses, des Geräts und/oder der Anlage (140).

10. Verfahren gemäß einem der Ansprüche 6 bis 9,
**dadurch gekennzeichnet,**
**dass** die Warn-Aktivität zumindest einen der nachfolgenden Verfahrensschritt umfasst:
- Erzeugen und/oder Ausgeben einer Warn-Information bezüglich einer möglicherweise unzulässigen Einflussnahme auf die Steuereinrichtung (110);
- Bringen des Prozesses, des Geräts und/oder der Anlage (140), oder Teilen davon, in einen sicheren Zustand;
- Stoppen des Prozesses, des Geräts und/oder der Anlage (140), oder Teilen davon.
